# EUROPEAN PATENT APPLICATION

(11) **EP 4 261 764 A1**
(43) Date of publication of application: **18.10.2023**
(21) Application number: 21906815.2
(22) Date of filing: 15.10.2021
(51) Int. Cl.: G06Q 50/10, G06Q 50/14, H04N 21/436, H04N 21/472, A63F 13/332

(54) **METHOD FOR PROVIDING CONTINUOUS TRANSPORT AND CONTENT SERVICE**

(30) Priority: 14.12.2020 KR 20200174204
(71) Applicant: KSEEK CO., LTD., Daejeon 34127 (KR)
(72) Inventor: KIM, Young-real, Daejeon 34127 (KR)
(74) Representative: Ter Meer Steinmeister & Partner
(86) International application number: PCT/KR2021/014419
(87) International publication number: WO 2022/131510

(57) **Abstract**

The present invention relates to a technology and a method for providing a continuous transport service and a continuous content service to a user by using a technique for matching a transport device such as a bicycle, a kick scooter, a vehicle, a train, a ship, or an aircraft to the movement of the user. Components according to various service types for providing continuous content services while a plurality of users connect a plurality of places to be moved are described, and presented are methods of providing gamification content using a plurality of transport devices or preparing tourism information including a plurality of places for a specific city or a specific region using a plurality of transport devices, providing the tourism information according to the user's language, and providing tourism content in connection with a transport service between the places. In the process of self-driving vehicles providing tourism services, gamification content service is provided in such a manner that users participating in entertainment services are allowed to use user modules to perform user missions, and mission performance information, which is a result of the user's user mission performance, is reflected in the user's movement and content. Said technology consists of a game or the like in which two different users or teams compete by accumulating points in the course of a transport and content service or by completing driving with respect to a plurality of given places in a short time. In addition, presented is a tourism service providing technology in which a plurality of self-driving vehicles continuously performs tourism services for users.

## Description

### Technical Field

The present invention relates to a service method for continuously providing a series of contents to users who move to a plurality of points using a plurality of transport devices.

In addition, the present invention relates to a service method in which any user continuously moves to the plurality of points, even if the plurality of users alternately board a transport device, in continuously moving the users to the plurality of points using the transport device.

In addition, the present invention relates to a service method for continuously providing a series of contents while continuously moving the user to the plurality of points using the plurality of transport devices.

The present invention relates to a method for continuously servicing tourism content related to the plurality of points while moving the user to the plurality of points with self-driving devices such as a plurality of self-driving drones and a plurality of self-driving vehicles.

### Background Art

There are self-driving vehicles and self-driving drones as conventional technologies in this field.

The self-driving vehicles are divided into six levels from level 0 to level 5, and levels 4 and 5 are classified as a self-driving vehicle that can be operated without driving directly by means of person.

In 2018, Waymo launched a pilot taxi business a pilot taxi business in Phoenix, Arizona using the world's first 4-level self-driving vehicle and GM's Cruise and Tesla are competing for technology development to preoccupy service.

These conventional self-driving vehicle technologies are developing technology-centrically in which the vehicle safely drives by recognizing the road environment. Recently, due to the introduction of self-driving, the development of infotainment technology that provides content services to passengers when they are not focused on driving is attracting attention.

Another conventional technology is a service that provides tourism service while a person driving a vehicle or an airplane. In Jeju Island, taxi drivers provide tourism services by moving users to the tourism destinations of the connected tour course by vehicle. In addition, in major cities around the world, a city tour service in the form of providing tourism information directly by using a bus driven by a person is provided.

Tour services using the bus or the taxi etc. require a wide parking lot for each tourism spot. In addition, if there is not enough parking space, vehicle congestion occurs in the tourism spot.

### Summary of Invention

### Technical Problem

The present invention is designed to continuously provide a series of content services that continuously move a plurality of points by a plurality of transport devices.

In particular, the present invention is intended to provide a method of efficiently providing user-centric continuous content while moving a plurality of users to a plurality of transport devices distributed in a plurality of points.

In addition, the present invention is to suggest a method of effectively providing tourism information to tourists while conveniently moving to various points using a self-driving vehicle or a self-driving drone.

### Solution to Problem

In order to solve the above problem, the present invention proposes a method for providing a continuous transport and content service on a plurality of points and a system thereof, the method including a step of preparing content including a plurality of points; a step of designating a first transport device among a plurality of transport devices to move a user to a first point; a step of designating a second transport device among the plurality of transport devices to move the user to a second point; and a step of continuously providing content service to the user boarding the first transport device or the second transport device.

In addition, the present invention proposes a method for providing a continuous transport and content service, the method including a step of driving a first self-driving device, which is one of a plurality of self-driving devices, to move a user to a first point; a step of providing content to the user boarding the first self-driving device; a step of driving a second self-driving device, which is one of the plurality of self-driving devices, to move the user to a second point; and a step of continuously providing content to the user boarding the second self-driving device.

In addition, the present invention is to suggest a service method for continuously providing tourism content and moving a plurality of tourists to a plurality of points using a plurality of transport devices.

In addition, the present invention is intended to propose a continuous transport and content service method for providing gamification content in a form of competing with competitors while continuously moving to a plurality of points.

### Advantageous Effects of Invention

According to the present invention, it is possible to reduce a waiting space for a transport device waiting for users by providing a connection transport to a plurality of users using a plurality of transport devices. In other words, in the case of vehicles, it is possible to provide various connection content services while greatly reducing the need for a parking lot through the connection transport service.

In addition, according to the present invention, it is possible to provide a tourism service that provides continuous transport service and continuous information on a plurality of points to a plurality of tourists by utilizing self-driving vehicles.

In addition, according to the present invention, it is possible to provide a game content service in which a plurality of users competes on a real road using a plurality of self-driving devices.

Through the present invention, by providing a self-driving vehicle-based local tourism service that can be enjoyed while protecting the privacy of individuals, families, lovers, and friends, it is possible to activate local tourism services and improve economic effects.

Through the present invention, it is expected to have an effect of supporting new formats of entertainment content service based on self-driving vehicles. In addition, the usability of self-driving vehicles can be expanded by pioneering the tourism service genre using self-driving vehicles.

### Brief Description of Drawings

The above and other objects, features and advantages of the present invention will be more apparent from the following detailed description taken in conjunction with the accompanying drawings, in which:
FIG. 1 illustrates a schematic diagram of a transport device;
FIG. 2 illustrates a schematic diagram of a user terminal;
FIG. 3 illustrates a schematic diagram of a gamification service using a self-driving vehicle; and
FIG. 4 illustrates a schematic diagram of a connection transport with respect to a plurality of points.

### Best Mode

### Mode for Invention

In the whole specification, the "user" is a person who is provided with self-driving vehicle-based tourism services. It is considered synonymous with the words "passenger" or "tourist". The "user" can be provided with self-driving vehicle-based tourism services as an individual user or a plurality of users of forming a team.

In the whole specification, the 'transport device' is a device that can move a person or object and move in a real space. Vehicles, trains, ships, aircraft, helicopters, etc. are included therein and self-driving transport devices such as self-driving vehicle and self-driving drones are also included. In this specification, descriptions of self-driving vehicles, self-driving devices, drones, ships, and the like are included in the description of the transport device.

In the whole specification, the "server" is connected to the user terminal or the transport device through wired/wireless communication and communication means such as the Internet, includes a service module, and is equipped with a DB system for storing data and information.

In the whole specification, the "content information" refers to a "route information" including a plurality of points and "content information" associated therewith. The content information may include video data, augmented reality content (AR), virtual reality content (VR), user history information, satisfaction surveys, user review data, and the like.

In the whole specification, the "tourism item" refers to the main object of tourism. It may be a restaurant, hotel, park, temple, palace, landmark building, museum, etc., and includes detailed performance programs, viewing programs, and tourism events such as walking, riding, and running, and the like.

In the whole specification, the "point" refers to a geographic or spatial location, may be displayed as coordinates such as longitude and latitude, or information such as address, and may be displayed as symbolic landmarks such as the Statue of Liberty, Tokyo Tower, Golden Gate Bridge, or Teheran-ro, or their relative location. In addition, the "point" may be expressed as the "tourism point" corresponding to the tourism item, and may be expressed as a starting point, a target point, an ending point, a waypoint, and the like.

In the whole specification, the "personal information" refers to various information related to an individual such as user's age, gender, region of residence, address, phone number, location information, language used, nationality, marital status, user mission execution status, user mission input information, tourism service use history, and family relationship and so on.

In the whole specification,the "competitor" means another user competing for victory or ranking with a team or a user participating in the same game, AI technology that behaves like a person, or a virtual character implemented with AI technology.

In the whole specification,the expressions such as "user's transport device" or "team's transport device" are transport devices designated for moving a user or team.

In the whole specification,the expression such as "competitor's transport device" may be a transport device designated to a competitor and may be a transport device that actually exists or a virtual transport device.

In the whole specification, the "user mission" is a task that a specific user needs to perform. It includes a vote mission in which several people decide opinions by voting, a quiz mission for solving the quiz; a vote mission in which multiple people ask for opinions; a photo mission that takes a picture of specific requirements; a transport mission that requires delaying movement for a certain period of time, that requires people, objects, or animals to board or move, or that require walking or running; and an action mission for performing specific actions.

In the whole specification, the "transport route" is configured to include a plurality of points and is necessary to provide continuous transport service. When the present invention is presented as a tourism service, a tourism route consisting of a plurality of points is defined as the same concept as the transport route.

In the whole specification, the "route information" is information necessary for the user to continuously move to a plurality of points. The route information may include a starting point, a target point, a beginning point, an ending point, a stop point, and the like, and may be composed of only a mileage and a time limit without either a destination point or a starting point.

The route information further includes driving conditions such as a driving limit speed on a road or an average speed of vehicles.

The driving conditions included in the route information may include a speed control information, a virtual fuel information, a driving mission information, and a map information etc. The virtual fuel information or the speed control information is not actual fuel information of a specific transport device or actual maximum driving speed on a real road, but is virtual data managed for game progress. That is, they are the virtual fuel information and the information necessary for speed control.

In the whole specification, the "driving state information" further includes the actual information of the self-driving vehicle such as a driving speed of the self-driving vehicle, a vibration on the road surface, a posture information, an acceleration and deceleration, a direction change, an actual fuel amount, a driving start, a driving end, and a current position and so on; and the virtual information such as a virtual obstacle displayed in a racing game, a collision with an obstacle, and a virtual uneven effect or vibration according to an obstacle.

In the whole specification, the "user module" receives mission performance information for the user's user mission and transmits it to the service module or outputs data and content data, which are transmitted from the service module.

The user module may include an input device such as a keyboard, mouse, sensor, camera, etc. attached to the transport device, or an output device such as a speaker or display, or an element module included in a separate terminal such as a smartphone, a tablet PC, or a HMD that performs an input/output function with the user in association with the server.

The user module may additionally be composed of an interface capable of recognizing an electronic bracelet capable of distinguishing the users and a credit card or the like.

In the present invention, the "display" is included as an additional module in the transport device (100) and refers to a unit module for outputting image information or data. The display included as a module of the user terminal existing as a separate device in association with the transport device is regarded as a display module of the transport device to provide the service.

In this specification, the "self-driving vehicle" refers to a vehicle that can drive on the road by itself without a driver for a certain section.

In this specification, the "self-driving drone" refers to a drone that moves a user by driving and moving a certain section without a driver for a certain section.

In the whole specification, the "driving module" is a module that transmits and receives data with the service module and allows the self-driving vehicle or the self-driving drone to drive on a road and an air route.

In the whole specification, the "mission performance information" is information input as a result of a user's performance of the user mission. In the quiz mission, the survey mission, the movement mission, the action mission, or the voting mission, the answer or the information input as a result of participating in the user mission becomes mission performance information.

The mission performance information may be a video or 4D data of the user's action, or data on the amount of time taken to perform or how successful the performance was. In addition, it may include data related to remittance or provision of items such as hearts or stars. Alternatively, it may be data including results of digital games, dice throwing, arm wrestling, etc. in which the user participates.

In the whole specification, the expressions such as "what of the team" and "what of the user" may be the same expression. In addition, "what of the transport device" may be the same as an expression of what of the user using the transport device.

In the whole specification, the "service module" is a module that continuously provides the transport and content services to the users with the transport device. The service module determines which point to move the user to and which transport device to designate in the server. In addition, it provides the user with information related to the content or the driving status.

The present invention provides a connection transport service for moving a plurality of users to a plurality of points using a plurality of transport devices and a method for providing a content service of connectivity to a moving user.

In order to effectively configure the present invention, it is necessary to configure a server that can be connected to a user terminal or a transport device as a network means, the plurality of transport devices, and the user terminal. In addition, it is desirable to configure software development and content for the configuration and operation of the network to connect them. In this case, it is desirable to place the main functions of the service module in the server.

Another method for effectively configuring the present invention is to configure a plurality of transport devices that can be connected to each other over the network without the server. At this time, it configures the service module in different transport devices to operate while communicating with each other.

As another method for effectively configuring the present invention, it is also possible to configure an individual transport device to provide continuous transport service and continuous content service for each user to several users.

In this specification, the content subject to the continuous service is included in a plurality of points. In addition, tourism content for tourists visiting each branch may be included therein. It can be a specific tourist attraction or a tour program.

The content includes a gamification content provided in the form of a competition in which a plurality of users moves to a plurality of points for victory, continuously accumulating users' points, shortening time or distance, or completing user missions.

The content may include an unidirectional content that unilaterally provides cultural, story, or historical information to users, or may be an interactive content that includes the user missions.

The user missions for constructing the interactive content service include a photo mission that takes a picture of specific requirements, an action mission for performing specific actions, a quiz mission for solving the quiz, and a vote mission in which multiple people ask for opinions, a transport mission that passes through any point or road, or carries or moves people and objects and so on.

The content may be a combination of at least one of an AR, a VR, a text, a video, a sound, a gamification, and the like.

The content may be a tourism content including materials such as a story related to the point, a geographical feature, a historical event, a person, transport status information, information related to a gamification, and a quiz and so on.

The transport device includes a vehicle, an aircraft, a drone, a ship, and the like, and includes a self-driving device such as a self-driving vehicle and a self-driving drone.

In the configuration of the present invention, it is composed of the server (service module) that can be accessed by network means such as the Internet, the transport device that moves the user on board, and the user module (user terminal or output device) that can output related content services.

In the configuration of the present invention, it further includes the content information about various points, the information about moving routes about various points, and the information about various points. In addition, it can further include the location information of a plurality of users and the preferences and personal information of users.

The above each information may be included as digital content materials.

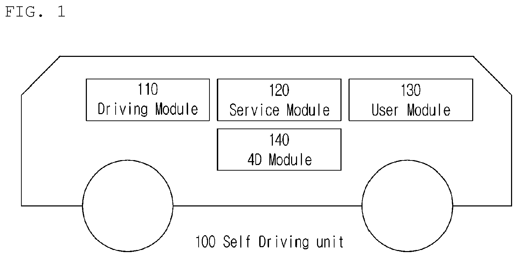

FIG. 1 illustrates a schematic diagram of a first transport device.

The first embodiment of the present invention is a self-driving vehicle (100) including a driving module (110) for managing driving, a service module (120) for managing continuous transport and content service, a user module (130) for performing a user mission, an output device such as a display and a speaker etc. for outputting tourism information although not shown in the drawings, and a camera for capturing images, and the like.

It may be desirable to configure each module of constituting the transport device as an independent device such as an independent server, PC, smartphone, HUD, HMD, etc., depending on the need. In addition, it may be desirable to connect and use them through the communication means such as Internet, LAN, wired or wireless.

If the transport device is the self-driving device such as the self-driving vehicle or the self-driving drone, the driving module (110) is a "self-driving module" and includes sensors such as lidar, radar, and optical cameras to manage self-driving. In addition, it further includes a precision map information and control a direction change, a speed control, a stop, and a start of the transport device.

In addition, it analyzes overall sensing information required for self-driving and additionally includes a judgment function necessary for driving.

The self-driving module (110) can be composed of several PCs, can be composed of a server system connected through the wired/wireless communication, etc., and is configured to be directly connected to a driving unit and a control unit of the transport device, if necessary.

The self-driving module (110) drives on a road and moves to a boarding point to pick up the user in response to the tourism service to be provided by the service module (120)

The self-driving module configures precision map and navigation functions to drive the transport device such as the self-driving device. When the user boards, the driving module (110) drives the road to move to the target point.

When the driving module (110) adjusts route information according to determination of mission performance information of the server (300) or the service module of the self-driving vehicle (100), the driving module (110) reflects the determination of mission performance information in transport and content services by including means for driving at certain deceleration from a speed limit or changing a transit area in response to the adjusted route information.

The service module prepares content including multi-point information. The location information for multiple points may be expressed in exact absolute values, such as geographic coordinates and addresses. It may be locations specified by geographical features, such as the south end of London Bridge, a specific park, and a specific beach, or moving points such as a moving object or person

The service module manages movement and content service histories for each of users. The service module provides the content service to a user who gets on the transport device to move to a first point and updates a history of providing the content service. When the user gets on the moving vehicle to move to a second point, the continuous content service is resumed by inquiring the history of providing the content service.

If the corresponding content includes a user mission to take a picture of the user with a specific object at the first point, the service module presents the user mission to the user. When the user gets on the transport vehicle to move to another point, the mission performance information for the user's mission is determined and reflected in the content service. At this time, the mission performance information of the user mission is judged and reflected in the content service by adding or subtracting points, adding transit(stop) points, or reducing transit points.

The service module may be moved by changing the transport device while the user moves to a plurality of points. At this time, even if the transport devices alternately move a plurality of users, from the user's point of view, content provision information for the user is managed so that the content is continuously provided through the transport device.

The service module provides the content services for multiple users, so that each user can continuously enjoy music, movies, gamification and tourism.

The service module provides gamification content services by accumulating the time taken while moving to a plurality of points for each user, summing up points, eliminating users from service targets, or providing related ranking information.

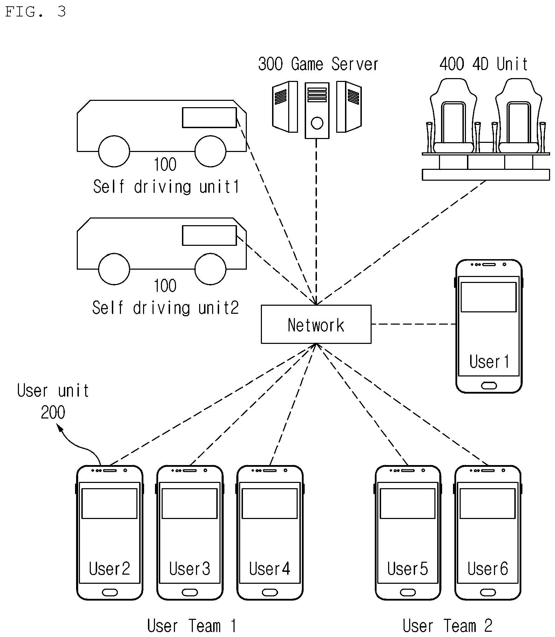

FIG. 3 illustrates a schematic diagram of a connected tourism service based on the self-driving vehicle including the server (300), the self-driving vehicle (100), and a user terminal (200).

This model is a model in which a plurality of self-driving vehicles (100) is configured around the server (300) and a tourism service is provided to a plurality of tourists carrying the user terminal (200) such as a smartphone.

In FIG. 3, each self-driving vehicle will be described in connection with each self-driving device or transport device.

The server (300) includes a service module (320) that manages the tourism service. In this model, the driving module and the user module, etc. of the transport device are connected to the server using wired and wireless communications to provide the services.

The user missions presented to the user or the user's team by the service module may include user missions that include point (branch) information and user missions that do not include the point information.

The user mission presented to the user or the team by the server (300) may be to pass through a specific point. In this case, the transport device arrives at the point and transmits location-related information measured by GPS, etc., or mission performance information such as photos or videos to the server (300), and the server (300) receives the transmitted mission performance information and reflects it in the service.

In FIG. 3, the service module serves to manage the contents including a plurality of points, the locations of the transport devices, the operation information thereof, the fuel information thereof, and the like. In addition, it manages each movement history and content use history for multiple users or teams.

A function for determining whether a specific user has boarded the transport device or a specific user is allowed to board the transport device is provided in the server and the transport device.

In addition, it can be configured in such a way that the transport device receives personal information such as a specific user's fingerprint, voice iris, identification code or identification number and confirms it in the server.

In addition, the user terminal such as the smartphone receives information such as the identification code and the identification number of the transport device and transmits the information to the server, so that the server authenticates the user's boarding through the user terminal.

The service module prepares various user missions such as the "quiz", the "tagging for specific objects", and the "specific actions", defines the form of mission performance information according to each user mission, and has a self-determination function or an external judgment function to reflect mission performance information.

For the quiz missions, the service module provides a method of comparing and determining whether some or all of the correct answers match. The user mission for the quiz mission may be judged by correct and incorrect answers, mission success and failure, scores, and the like. In addition, it should also include a function of determining the ranking of a plurality of users in a competitive relationship.

The service module includes a function to evaluate the user's gamification performance based on the time taken to arrive at each point for the progress of the gamification content, or the score or the ranking thereof. In addition, it should also include a function to accumulate points for each user or drop the users, or to determine the ranking thereof by measuring time.

In addition, the service module collects data such as personal information and the user reviews to provide better tourism services to each user, and when the data is accumulated, it is analyzed to build information that can provide better content to people.

The service module further includes a DB module and a storage device, and manages information on key points to be provided to users and content information. In addition, it is involved in providing tourism services based on the tourism route that includes multiple points and tourism content.

The DB module holds tourism information on major tourism items to be presented to users, content of game-based tourism services, and configuration scenarios thereof. In addition, it stores and manages information on individual users' content use history, personal information, information on points, etc.

The DB module systematically manages information on tourism items such as restaurants, recreational facilities, hotels, parks, zoos, aquariums, palaces, castles, museums, and schools and so on.

The DB module is designed to systematically manage information such as the location of tourism items, the addresses thereof, the explanatory data thereof, the video data thereof, the previous visitor satisfaction information, and the user missions and so on.

The service module is basically included in the server, and the main functions and roles of the server are performed by the service module. In addition, if necessary, the service module configures some or all of the functions in the transport device.

The service module in the present invention allows the server or transport device to have the service module as needed. In the present invention, functions related to the service module are commonly applied to both servers and transport devices.

The service module is configured to provide the tourism services based on the tourism route set by including the plurality of points and the tourism content in order to provide continuous transport and continuous tourism services toward multiple points within a certain area range.

The service module moves the tourist to a specific point when the tourist gets on the self-driving vehicle, and presents the user mission or continuously provides the tourism information while moving.

In order to provide a more efficient tourism service, the user terminal may include a service module having some functions. The user terminal manages the user's tourism service and additionally receives the tourism information through the Internet and presents it to the user.

In order to implement a method in which the service module provides the content services while moving the multiple users to the multiple points through the multiple transport devices, the service module designates a corresponding transport device for each user to move to a specific point.

In the order in which the user designates a first transport device to move to the first point, which is one of the plurality of points and designates a second transport device to move to the second point different from the first point, the service module assigns the transport devices to a corresponding user moving to the plurality of points.

While the first and second points are different points from each other, the first transport device and the second transport device among the plurality of transport devices can be selected in consideration of the approach distance or the access time to each point, the waiting time, the fuel condition and so on. That is, it does not necessarily have to be the same transport device.

The service module provides the continuous content services while storing and managing the service use history of the user when the user moves to the plurality of points by the plurality of transport devices.

The service module prepares 10 quizzes as user missions and 10 points, and then, while moving to each point, the service module continuously sets the quizzes to obtain scores, and provides the quiz game content to secure the final scores.

The service module provides a game service in the form of quickly passing a given point by allowing the user to reflect on the service in a manner such as a delay of moving to the next step, if the user makes a mistake in the quiz step.

The service module recommends the tourism route and the tourism content including 10 points and guide information related to each point to the user, and continuously provides the tourism content associated with each point at each step in which the user connects and moves to each point.

The user mission may further include the action missions in which the user terminal is geographically close to a point installed at a specific point, it recognizes a specific building or person, or it tags a specific identification code or a proximity sensor and so on.

The user terminal outputs information that can identify the user through a QR code or proximity sensor communication, and recognizes it to confirm entry or visit to a specific facility.

For the step in which the user module receives the mission performance data, an input module such as a sensor, a camera, a keyboard mouse, a touch pad, and a microphone corresponding to data such as answers, actions, and photos for each user mission is provided therein.

The user module includes an output module such as a speaker, an HDMI port, a voice output port, and a display for outputting the content information.

The service module determines the mission performance information by comparing whether some or all of the correct answers are satisfied, by analyzing the voting results of the users, by judging whether the user has performed an action that meets the corresponding conditions, or by judging whether it takes a picture that meets the corresponding conditions.

In the step where the service module determines the mission performance information, it is configured in a way that the user throws dice and determines whether the information entered as a result is a large value or a small value in comparison with others, or it can be configured to determine the result of processing or transforming the data input to the user module through an arbitrary process.

In the method of reflecting the mission performance information of the user mission, the driving of the transport device on which a specific user is boarded is temporarily stopped, the driving is resumed from the stopped state, the driving is performed by changing the maximum or minimum driving speed, the driving route is changed, or it drives in a specific driving direction.

In the case of changing the tourism route of the transport device above, it may pass through one more point, omit visiting on some points, or change an intermediate driving route for a certain point. At this time, the user missions to be performed at the point are designated together.

In the method of reflecting the mission performance information of the user mission to the movement of a specific user, a virtual obstacle or a virtual accident situation is provided to the user's transport device, it delays the user's boarding of the transport device, or it delays the next user mission.

The service module analyzes data on the number of users at each point, an average delay time of users at each point, and a traffic flow by time or season so as to increase efficiency in moving the multiple users to the multiple points by using the multiple transport devices. After analyzing, the required travel demand for each point is predicted. To this end, the transport device is moved in advance to a specific point where the movement demand is expected to occur.

When the user gets on the transport device, the transport device transmits information about the user to the service module. At this time, the service module designates the transport device as the user's transport device. As a result, an extra transport device is waiting in advance at a specific boarding position, and the user can board the transport device.

In another designation method for the transport device, when the user transmits the identification information about the transport device waiting for boarding to the server through the user terminal, the server can designate the transport device as the user's transport device.

If the transport device designated as a specific user's transport device is a general transport device controlled by a person, a terminal used by a person who operates or drives the transport device is additionally configured and the service module transmits the route information including any point to which the user is to be moved and information about the user to the terminal.

A means capable of displaying the map, the route information, the estimated time of arrival, and the current driving position, etc. is further added to the terminal or the transport device used by the driver.

If the transport device is a self-driving device, the service module transmits information about the transport points of the user.

When the transport device needs to move to a boarding position for the user, the service module transmits the point information of the user's boarding position to the terminal of the driver or the terminal of the transport device.

If the transport device is a self-driving device, it moves to the boarding position if necessary, and moves the user by driving to the point when the user boards.

In addition, when arriving at the point, the self-driving vehicle allows the user to get off.

When the user boards the transport device, the service terminal provides the content service provided to the user through the transport device. However, it is necessary to check whether there are some previously provided contents and to provide continuous content services.

The content is configured to include the interactive content including the user mission or content related to the point.

The service module can continuously provide the content service when the user boards another transport device other than the transport device by managing a history of the content service provided to the user through the transport device.

The service module provides continuous content such as a racing game, a quiz game, and tourism content including a plurality of points to the user of boarding the designated transport device. The service module provides the user missions for interactive contents and provides the gamification content that can be enjoyed while moving to various points.

As an example of a concrete method of servicing the continuous content in gamification, the photo mission is presented to the user riding the transport device of moving to a first point to take a specific photo at the first point through the mobile terminal, and when the user transmits the photo of the user terminal, which is the result of performing the photo mission at the first point, to the service module through the transport terminal, the next user mission is provided in the transport vehicle after boarding to move to the second point.

As an example of some changes in the above configuration, the user mission is presented to the user terminal through the direct communication between the server including the service module and the user terminal, the service module determines the user mission information input to the user terminal, and the service module again presents the continuous transport to the next point to the user. Therefore, it can provide the gamification content to the users as a whole.

In addition, the user module downloads AR and VR data, so that AR information can be displayed on objects captured by the camera of the user module, and a satisfaction level, a congestion level, a preference, etc. of the user are reviewed to recommend the tourism route that includes the multiple points.

When the user finishes the tour at the first point, which is one of the plurality of points, it informs the user terminal of this. Then, the user terminal provides the continuous transport on the second point, which is another one of the plurality of points and the continuous content to the service module.

The service module designates another transport device to move the user and provides the continuous transport service. The service module continuously provides the content services to the user of boarding another transport device.

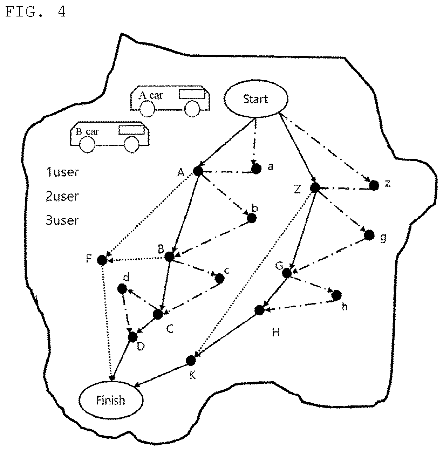

FIG. 4 is a schematic diagram of a continuous transport and a content service for a plurality of points consisting of two courses in a racing game area.

Referring to FIG. 4, the continuous transport and continuous content service in which user 1, user 2, and user 3, each of which are different users, participate in the racing game will be described.

First, three teams start at the same time, start from the "Start" point, and pass through points A, B, C, and D. Here, the team that reaches the "Finish" point first wins.

The server prepares the game content including the location information on all accessible points in advance. In addition, it prepares the user missions that users must participate in the game in advance. At each point, the user missions to be performed by the user are arranged one by one.

Here, it prepares A car and B car as the transport device.

The service module allows one team to ride in one vehicle at the same time to move and the team without the vehicle waits until the next vehicle is designated before moving to participate in the game.

The user 1, the user 2, and the user 3 participate in the quiz as the user mission before departure, respectively.

The service module designates and moves each vehicle according to the order of the users who answered correctly, so the last user starts last in the first user mission.

The vehicle basically provides only the transport service to the next point. However, by performing a separate user mission in the vehicle, it can be advantageously or disadvantageously moved by changing to another point.

The team or user who arrives at the finish point first among the users wins. Or, the person with the least amount of time or the most points to reach the finish line wins.

In FIG. 4, if each transport device is the self-driving vehicle, the designated self-driving vehicle drives and moves to the next point when the user boards, thereby providing the transport service.

In FIG. 4, if the vehicle is a vehicle such as a taxi or a truck, the destination is notified to the terminal of the driver of the designated vehicle, so that the transport service can be provided.

Referring to FIG. 4, the continuous transport and the continuous tourism services will be described.

A, B, C, D, F, Z, G, H, K, etc. are points of popular tourism attractions within a given region (it can be a county or city). The tourists start at the Start point and end at the Finish point. The service module builds two tour courses according to the user's age group as shown in the drawing and analyzes data such as other users' preferences or satisfaction surveys and reviews and a traffic congestion at each point or a congestion of the transport route, so that it can replace with alternative points such as a, b, c, d, g, z, h, etc.

For ease of classification, it classifies different users into the 1, the user 2, and the user 3, respectively.

The service module designates A car to move to point A for the user 1. The service module provides tourism contents (AR, VR, chatbot) to the user 1 through A car. Until the user gets off the A car, the service module stores information on how far tourism content has been provided and on which step of the user mission has been performed in the server.

When the user 1 gets off at point A, the service module assigns the A car to the user 2 to move to the point b after finishing sightseeing at a point A.

The service module provides the tourism content to the user 2 who boards the A car.

The service module provides the tourism content for the user 3 while the B car moves the user 3 to the point A.

The service module receives a signal that the user 1 has finished sightseeing at the point A, and designates nearby vehicle B as a vehicle that moves the user 1 to a point B.

When the user 1 gets on the B car to move to the point B, the service module provides the user mission of the next step to the existing user mission step provided to the user 1, so that content service can be continuously provided.

In this process, the service module manages each user's location information and tourism service usage information, and continuously provides the tourism services centered on users.

In the tourism information of the service module, object information used to be recognized as an external object of the transport device and tourism information connected to the object are preferably configured together.

The tourism information is provided to match location information such as GPS along with the object information related to a specific object.

An image captured by a camera at a specific location is analyzed, so that the object information is compared to distinguish a specific object. In addition, the service of providing the tourism information is established by checking whether there is tourism information connected to the specific object.

The service module further includes a function to determine victory or defeat for gamification content. In addition, the service module includes a means for checking the time required to complete a game or a time limit for the user missions, a means for each user to accumulate scores through the user missions, and a means for sorting the performance of each user into a ranking as an algorithm.

The service module includes a DB or storage device, has content for providing tourism services to users, manages a usage status of a tourism service for each user, manages information on a usage result of the user for a major tourism item or a tourist spot and a visit record information, and stores and manages various scenarios and content for providing game-based tourism services.

The service module may include additional functions such as GPS, map information, object recognition, and short-distance network functions, and includes means for determining a current location of the self-driving vehicle and an external object (such as a major building, signboard, sign, road floor sign, person, animal, vehicle, or landmark) or determining whether an arbitrary location or object is almost reached.

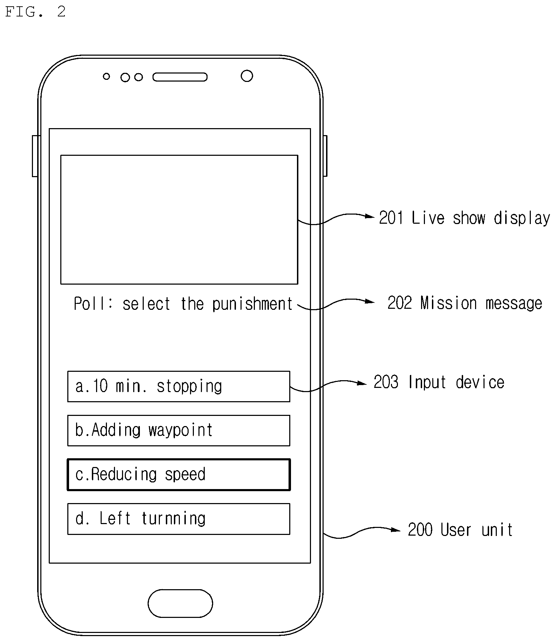

FIG. 2 is a schematic diagram of a user terminal.

The user module (130) includes an output device such as a display for outputting an image and a speaker for outputting a sound. In addition, the user module includes an input device such as a touch pad, mouse, keyboard, voice recognition camera, microphone, etc. The user module (130) further includes a motion sensor capable of receiving motion information.

The display is configured to extend to a display module such as a tablet PC, a smartphone, or an HMD being used by the user.

In the present invention, it is possible to apply the user module (130) to the user terminal (200) configured in a separate HW terminal, and it is interpreted that the user module and the user terminal have the same application.

An example of the game-based tourism service provided by the present invention is a time recording game for a mission continuously performed by a user enjoying tourism while moving to the plurality of points.

In the game module, a score is obtained from the user mission, and each score is accumulated. The plurality of users constitutes a game service in which a ranking is determined based on a completion time or each accumulated score.

In addition, it can provide a gamification service in which, in the process of a plurality of users going through points in each order, peoples outside a certain rank are eliminated through user missions, and a person who is not eliminated until the final stage is judged as a winner.

As another game method, it is possible to configure a gamification content in which the user who has succeeded in moving to the most points within a specified time limit wins, or it classifies as success/failure whether or not all of the given points have been moved within the specified time limit or whether or not it has reached the finish point.

The service module (120) is configured to present various types of game-based tourism service scenarios and the user missions corresponding to them and so on.

It is possible for the service module to use the user terminal to perform a user mission. However, for a user riding in the transport vehicle, a camera, a touch pad, a motion sensor, a keyboard, a mouse, and a device for receiving input of voice may be provided in the transport vehicle to receive mission performance information, etc.

It is preferable that the service module presents the user mission to the user on board by using an output device such as a display or a speaker of the user module or the user terminal.

In other words, in the case of a game service using the self-driving vehicle in the center of Rome, a tourism route can be configured to pass through famous places in Rome based on tourism items, tourism information, and quizzes about Rome.

The service module (120) provides the tourism service to the user using a method in which major information such as tourism information, user tourism service usage information, driving state information, route information, etc. is frequently exchanged with a driving module, a participant module, a display, etc.

The service module records and manages a tourism service usage result of each user, and collects user satisfaction and opinions for each tourism item.

The service module provides the continuous transport service and the tourism information service to the users based on the tourism route that connects a plurality of tourist spots. Here, the tourism route may be a tourism route input and stored by a person, or a route designated by a service module through data analysis.

The service module stores and manages tourism information data. A service is provided so that city tourism business parties or tourism service experts can compose these materials, and there is a function of self-collecting information on the Internet such as related news and blogs.

The service module continuously investigates, records, and manages user reviews and satisfaction from users using tourism services, and collects relevant information on the Internet to build big data.

Tourism information for tourism content service includes restaurant information, lodging information, information on major landmarks, and information on performance venues or performance programs together with related physical location information and user satisfaction or review information.

The service module presents information on a plurality of routes or points on the user terminal or the display and allows the user to make a selection. A function is provided so that user selects a tourism route and adds or deletes a tourism item in the tourism route.

In the tourism route, information such as a congestion level during the tour, the results of previous user satisfaction surveys, ratings, and reviews are presented or by analyzing the above information and the user's personal information, a specific point or a tourism route is recommended to assist the user in a selection process.

The service module is allowed to calculate the congestion level for the tourism item. The congestion level can be calculated in consideration of the number of capacity that can be accommodated by the tourism item, an average tour time of people, a waiting time to use the service, etc.

The service module is configured to provide tourism information to the user in a manner described by a digital character displayed on the display. At this time, it is possible to recommend a digital character based on the personal information of the user or designate and service a virtual character according to the user's selection.

It is preferable that the digital character looks like a human face and can have emotional expression through expression production. In addition to humans, it is possible to anthropomorphize objects such as dogs and robots.

The service module accumulates conversations with the digital character selected by the user while moving to a plurality of points through a plurality of transport devices. At this time, the conversation service is continuously provided while accumulating the conversation service with the digital character.

When the HMD secures an external image reflected by the gaze of the user, the HMD analyzes the image to recognize an object. The HMD is a generic term for display devices mounted on a head of the user, and includes a goggle-type HMD, a smartphone docking-type HMD, and smart glasses.

The transport vehicle (100) is additionally equipped with a sensor such as a camera or lidar, and through this sensor, an external object is identified and tourism information related to the external object is provided through the display. The tourism information is displayed along with the image captured by the camera or only tourism information is provided on the display.

The user module (130) additionally configures a function of receiving mission performance information and a satisfaction survey for tourism services in response to the user missions. In order to receive the mission performance information, the function includes input functions of a camera, a microphone, a motion sensor, a GPS, etc.

The service module (120) includes a step of determining mission performance information for a user mission or a driving mission received from the user module (130).

The service module (120) determines the mission performance information based on whether a correct answer of a quiz is satisfied for a quiz mission. Differentiated scores can be given based on whether the correct answer is completely satisfied or partially satisfied.

The service module (120) determines the mission performance information for the action mission based on whether the user's motion corresponds to the target motion or whether a specific song is sung in accordance with conditions, so that it is reflected in the service the judgement process.

The service module (120) may collect and analyze the user's facial expressions, cheers, remarks, and exclamations for a specific moving point or content service, so that it responds to an input of a satisfaction survey result of usage.

The service module (120) has a self-determination function of the mission performance information or an external judgment function in order to apply mission performance information for the photo mission, the action mission, the transport missions, and the like to the game.

In the online game, the winning or losing of the plural users may be a judgment result, or a stage of the game passed by the user or whether or not the user participated in the game may be a judgment result. The participation of the user in the online game is also included in the action mission.

The virtual driving environment may be a driving environment such as an unpaved road, a sandy beach, a gravel road, unevenness, or a roadside, and a driving environment such as a sharp turn or running on a horse or carriage may be applied.

Content may be additionally configured in the virtual driving environment. More realistic tourism information is provided by displaying related content such as AR and VR on the display and outputting related sound.

When the service module (120) transmits virtual image information or data related to the image information to the user module (130), the user module secures the virtual image information and outputs the information to a display thereof or a connected display device.

In addition to the method of outputting only the virtual image, the user module (130) is also configured by a method of outputting the virtual image in addition to the actual image captured outside the vehicle.

It is configured so that the virtual image output by the user module (130) can express a collision with a virtual vehicle or building, a situation in which a road is destroyed by a rocket launched by a competing team and driving is blocked, objects (which may be rocks, people, animals, etc.) appearing as obstacles on an external road, and events related to historical events on roads or crossings, etc.

FIG. 2 is a schematic diagram illustrating an example of using a smartphone as a user terminal.

Even though FIG. 2 illustrates the smartphone as the user terminal (200), the independent user terminal (200) is not limited to the smartphone and may be replaced with a tablet PC, a laptop PC, a PC, or a separately manufactured HW terminal.

When the user terminal (200) is configured as a separate device, the functions of the user module may be configured in the user terminal throughout the specification. The user module should be understood as an accessory function of the user terminal regardless of the separate delimiter of the module or device.

The user terminal (200) and the user module (130) of the self-driving vehicle may be configured to overlap each other, and it is desirable to also provide a user service complementary to each other.

When the smart phone device is used as the user terminal (200), it is possible to provide a connected tourism service to a plurality of user with one self-driving vehicle at the same time by providing a tourism service that is customized for each user based on the user terminal.

When a smartphone is used as the user terminal (200), a display or input device may be limited. In this case, it is preferable to supplementally configure a large-size standard display or various sensors installed in the self-driving vehicle as a user module.

An application or SW that performs the user module function is installed or downloaded on the smartphone and operated, and data is exchanged with the self-driving vehicle through communication means such as Bluetooth, WiFi, or the Internet to perform a role.

The service module composes game-based participation technology for a plurality of user terminals to induce the plurality of users to competitively participate in the mission and to give individual points to those succeeded in the mission.

When the plurality of users participates in the same mission, the service module may allow only those succeeded in the mission within a certain rank to be recognized as success and given a score.

The service module configures route information including a plurality of points, and provides a gamification content service in which a specific user selectively uses a plurality of transport devices or a plurality of users alternately uses a specific transport device, while competing in moving to designated points.

The service module (120) reflects the user mission to the game by adding or subtracting points for each user according to the judgment result. The service module (120) creates overall ranking information of the user.

The service module (120) configures an item for a penalty to be imposed on a corresponding team or user when the user mission is not performed or for a reward to be imposed when the user performs well.

The penalty imposed by the service module (120) according to the result of the user mission may include encountering a virtual obstacle, reduction in virtual fuel, or change of driving route.

As a reward imposed by the service module (120) according to the result of the user mission may include removing a virtual obstacle, replenishment in virtual fuel, or exclusion of a driving point. Or a team may be given a virtual weapon that can attack an opposing team. The virtual weapon may be a rocket attack, obstacle installation, road blocking, pause, deduction of virtual fuel, and pause of user activity.

As another reward, online currency, money, goods, etc. may be offered as prizes, or a ranking is determined based on accumulated scores.

The service module (120) displays a virtual obstacle on the user module (130) and provides a user mission for the user to remove the virtual obstacle using the user module (130).

In other words, a virtual image related to the procession of a flock of monkeys that appears as a virtual obstacle on the road is output, and to remove the monkey obstacle, the user throws a banana preferred by the monkeys as an item or delivers the banana by an input action such as dragging and dropping, and received mission performance information is transmitted to the service module (130).

It is also preferable that the service module (130) is configured in such a way that some or all of the obstacles are removed by determining the mission performance information as an action mission of the user.

Various user missions suitable for game elements are configured including the user shouting or performing a certain pattern of action to eliminate obstacles.

For a user mission performed by a plurality of users of one self-driving vehicle, a result of mission performance performed by the users together is operated as a criterion for determining the mission performance result of the self-driving vehicle. For example, when six users submit an answer to a quiz mission, the mission may be determined to be successful only when two or more users submit a correct answer. The user may necessarily be a user who has boarded, but a non-boarded user may participate in the user mission using the user terminal.

The service module (120) receives, from a plurality of user modules (130), and analyzes mission performance information for a voting mission for determining a desired driving direction in a plurality of driving directions, and the driving module (110) drives in the most selected driving direction.

In response to the voting mission of the service module (120), the user module (130) provides a user interface for selecting one or more options among several options. In addition, an input device is provided to allow subjective voting.

The service module (120) can be configured by applying a criterion for voting mission failure, such as recognizing the voting mission as a failure, when the user above a specified level did not vote or when there is no result of receiving a vote above the specified level.

When a user succeeds in the mission, the service module (120) applies the result to the tourism service to be advantageous for the user's game by adding more virtual fuel or reducing penalty factors such as deceleration or pause.

It is possible to configure the server (300) as a single computer. However, if necessary, the server (300) is preferably divided according to a functional unit and configured as a plurality of servers.

The server (300) constitutes a combination of a plurality of self-driving vehicles and user terminals, and is configured to provide a tourism service in which a plurality of users or teams participate simultaneously through a network.

The server (300) configures main functions of the service module (120) for game operation to form an independent server. At this time, the service module (120) of the self-driving vehicle (100) needs to be removed or configured to be used as a supplement.

When the service module (120) of the self-driving vehicle (100) is not configured, the server (300) is configured to respond to each module of the self-driving vehicle through communication.

The server (300) is configured to independently perform all the functions presented by the service module (120) or if necessary, the server (300) is preferably configured such that the server (300) and the service module (120) complement each other while maintaining the service module (120) in the self-driving vehicle (100).

In a game-based tourism service in which a plurality of self-driving vehicles (100) competes in real time, it is preferable to include a service module in the server (300) and allow a plurality of self-driving vehicles connected through a network to participate in the game.

In order to provide a game-based tourism service between self-driving vehicles without the server (300), a service module is built in each self-driving vehicle, and each service module is implemented through communication and work sharing with each other.

In the user mission and driving mission required to provide the game-based tourism service, the service module has a mission system for various targets such as a mission in which some users individually participate, a mission in which some or all users of a team participate, or a mission in which all users participate

When a plurality of users participates in a quiz mission at the same time, the service module receives an answer that is mission performance information from the user terminal within a predetermined time and determines whether the answer is a correct answer. It is desirable to perform the determination such that differentiated scores are given according to whether the answer perfectly matches or partially matches, a time taken for the answer, etc.

When a certain user succeeds in a mission in which a plurality of users participates simultaneously, the service module may determine that a mission performance of a user performing the mission thereafter as failure.

That is, in a quiz mission, in the case where one user gets a correct answer first, another user cannot be determined to succeed or receive a score even when the other user participates in the quiz mission.

The service module provides voting missions for users of the team, determines results, and allows the results to be reflected in the service.

The service module provides voting missions in the form of making determination favorable to the user or the team or penalizing the competitor or the competing team at a disadvantage.

User team 1 includes three users, user 2, user 3, and user 4, and user team 2 includes two users, user 5 and user 6.

The service module provides a simple quiz mission to assign two self-driving vehicles of different types to each team. The quiz mission is subjective and presented to user terminals of the five users at the same time.

When each of the five users inputs an answer considered to be a correct answer to the user terminal, the user terminal transmits the corresponding answer to the service module, and the service module determines whether the answer is the correct answer

The service module gives the team of the user answering the correct answer first the right to select between two self-driving vehicle models first.

Assuming that user 3 has the correct answer, the service module presents a voting mission for all members of team 1 to select one of the two self-driving vehicles. Voting closes within a limited time, and the service module allocates the most selected vehicle model to team 1 and the remaining vehicle model to team 2.

The service module can allocate two pieces of route information from two or more pieces of route information to each team through such a mission performance method.

The service module prepares and retains route information for a plurality of points. The route information can be set in the form of designating main points at the beginning and the end or passing through certain points. The service module allocates route information to each self-driving vehicle, and the self-driving vehicle starts driving based on the route information.

The service module allows each team to designate the attack right and the evasion right. It is desirable to provide the attack right and the evasion right when the user mission or driving mission is successfully performed.

The attack right is used by each team to disrupt the driving of the opposing team by stopping the driving for a certain period of time, making the opposing team meet virtual obstacles while driving, or adding an unfavorable driving section.

The evasion right is provided in the form of skipping some tourist spots and driving sections or nullifying obstacles.

Related information is transmitted to a user terminal belonging to the team so that all or some of the members of team 1 can use the attack right and the evasion right, and the user terminal (200) has an output and input function for selecting an attack target or permitting use so that the attack right can be used.

The service module needs to be configured to designate a user as a team leader for each team so that the team leader becomes a person concerned that executes the attack right and the evasion right or becomes a person concerned that performs the user mission or driving mission. A voting mission may be performed at the stage where the user is determined as the leader of the team, and it is desirable to have some of the cast members take charge during the game broadcast production.

The service module is allowed to provide a voting mission as an additional user mission so that the attack right or the evasion right is determined by collective intelligence of the majority. Content according to the attack right and the evasion right is reflected based on a voting result.

When the user uses the attack right against the opposing team, the user terminal (200) receives attack right usage information and transmits the information to the service module. Upon receiving the attack right usage information from the user terminal of the team, after whether the corresponding attack right can be used is verified, the usage is approved to adjust route information of the opposing team, and related information is transmitted to the driving module (110). The driving module (110) receives the adjusted route information and applies the information to the transport service of the transport device.

The service module may be configured to provide route information from beginning to end to a specific driving module. As another method, the service module may provide route information using a method of dividing the entire route information into several section units so that route information of a tourist section to be completed sequentially is transmitted to the driving module (110).

In the case where the service module is configured to transmit route information including several sections to the driving module (110) in stages, when a time delay penalty is applied to the self-driving vehicle, route information of a next section may be provided to the driving module (110) as late as a time to delay after completing route information of an arbitrary section.

The service module composes the route information of the self-driving vehicle by adding more mission information. The mission information to be performed by the driving module (110) of the self-driving device includes a method that can be performed in the field, such as a method of arriving via a certain point, a method of taking a picture of a designated target, and a method of receiving a designated object, etc.

The service module further adds information on virtual fuel information and maximum driving speed to the route information. Here, the fuel information is not information about the fuel of an actual self-driving vehicle.

The fuel information enables the self-driving vehicle to determine whether to stop and resume operation or to set the maximum driving speed. When driving continuously with the designated route information, the fuel is deducted. In the actual game-based tourism service, fuel information may be displayed in points or other formats.

The self-driving vehicle is driven at a speed whichever is lower between the maximum driving speed of the route information and the legal maximum driving speed of the road on which the vehicle is actually driven. It is preferable to set the maximum driving speed to -10 km/h, -20 km/h, etc. to designate the amount of deceleration from the actual road speed limit.

When the fuel is greater than or equal to a certain amount, the actual operating speed of the self-driving vehicle is set to the maximum speed allowed on the road, and when the fuel is less than or equal to the certain amount, the maximum operating speed is adjusted to be lowered.

The service module transmits a user mission to the user terminal (200) to prevent a situation in which the fuel amount is insufficient for users using the game-based tourism service.

When the user inputs mission performance information to the user terminal (200), the user terminal (200) transmits the information to the service module and the server replenishes the specified amount of fuel.

In the service module, user missions provided for fuel replenishment may be quiz solving, advertisement viewing, data input, photo missions, etc. Depending on whether the condition is satisfied or not, it is possible to adjust the amount of fuel to be replenished or not to be replenished.

In the service module, the fuel is preferably displayed as a number with a unit of amount. However, the fuel may be displayed as points or the number of items such as hearts, or stars. It is desirable to configure fuel, points, items, etc. using a plurality of methods.

The service module transmits some or all of the driving state information and route information of the self-driving vehicle using the game-based tourism service to the user terminal (200). The user terminal (200) receives and outputs the driving state information and route information.

The service module transmits image data related to the game progress to the user terminal, and the user terminal (200) receives the image data and outputs the image data on the display.

When there is information related to a virtual obstacle in the image data, the virtual obstacle is displayed to be viewed on the display of the user terminal (200), and information related to mission performance of users for removing the virtual obstacle is received and transmitted to the service module.

When the virtual obstacle is a rock, the display displays the virtual rock on the real road screen using AR technology, and the user is provided with means for removing the obstacle through a user mission in the form of pulling out the virtual rock or hammering to break the rock by touching the screen.

When the virtual obstacle is a cat, a photo mission is configured so that the user takes a picture of the cat and transmits the picture and the service module receives the cat picture from a plurality of users and makes the cat disappear.

A user mission is further configured in which a user pays a price by paying a certain amount of electronic money or points in order to remove the virtual obstacle.

The service module presents a penalty in which the user or participating team detours to another route or a certain time is delayed, while the obstacle is not removed. As another penalty, deprivation of user qualifications, termination of the game, suspension for a certain period of time, elimination, etc. is given.

The service module provides user mission information to the user terminal (200) so as to secure an item used for the attack right of the opposing team.

When the user completes the mission, the service module grants the attack right to the team or the user and transmits the attack right information to the user module.

The service module has an input tool to receive the attack right information, output the information so that the user can use the information, and allow the attack right to be used.

When the user inputs information to use the attack right, the user module transmits information about the self-driving vehicle to which the attack right is to be applied and information related to the attack right to the service module.

The service module finally constitutes a step of determining a result of the self-driving vehicle-based game. The service module determines the result of the game using one of a method of determining the ranking based on driving results of a plurality of self-driving vehicles, a method of providing prizes, a method of determining victory and defeat with competing users, a method of determining success or failure of driving results, etc.

The service module further includes a step of finally determining whether or not the user completes the multiple points. Whether or not the self-driving vehicle completes the course for the route information is configured so that the driving results such as score or success or failure are reflected in the game determination depending on whether the vehicle properly passes a starting point, destination, waypoint, etc., a time taken to complete the course, and whether the driving mission is performed.

The service module further adds a step of adjusting the driving route of the self-driving vehicle using collective intelligence by gathering determinations of a plurality of users included in the team. Here, the collective intelligence analyzes opinions of the plurality of users and reflects the opinions in the game. A simplest method is to select a competitor through a voting mission and allow selection of attack right to use. Alternatively, it is an excellent method to support selection of one of several driving conditions of the self-driving vehicle.

Another method of the service module to adjust the route information using the collective intelligence is to use a quiz mission. In this method, different words containing letters or spellings are presented, and the team that succeeds first is given the attack right or replenished with virtual fuel.

The user module is provided with means for performing various user missions. That is, an input method is configured using a method of shaking the user terminal up and down or left and right, a method of clicking an icon displayed on the display of the user terminal, etc.

FIG. 2 illustrates a schematic diagram of a user terminal. The schematic diagram of FIG. 2 is a user terminal using a smartphone, and there is a touchpad on the screen in which the display and the input function work together. Separately, a microphone and a camera have input functions, and a GPS function, a network function, and a motion sensor function are further included.

In order to effectively achieve the object and the effect of the present invention, a separate external judgment citation function and an operator function should be additionally applied thereto. The external judgment citation function and the operator function are operated in conjunction with the service module by developing a SW to have a web UI or a separate terminal function.

The external judgment citation function constitutes a judgment terminal function in which a user, who determines whether the user mission has been performed, directly judges the situation, receives the judgment result, and transmits it to the service module. The service module is configured to reflect the mission performance information to the content service based on the judgment result transmitted from the judgment terminal.

The operator function configures a function of configuring the user mission used by the service module or managed by the DB module, and a management function of designating or changing the point information, information on various contents, user information, scores at each user mission, scores awarded when arriving at each point, etc.

In the provision of continuous content, functions of penalizing a user, adding a user mission, designating a winning team, or providing a prize are additionally configured.

The operator function makes it possible to designate whether to increase or decrease the number of waiting transport devices at a specific point according to the operator's instruction, so that the service module can adjust the waiting number of transport devices according to the operator's instruction through a vehicle schedule management.

Even though the self-driving devices boarded by users or a user group to move to multiple points in succession are different or several users alternately use the same self-driving device, the service is provided by connecting tourism items included in the tourism route used by the users.

The user getting off at a tourism place after moving by a self-driving vehicle needs to be able to board a self-driving vehicle other than the above-mentioned self-driving vehicle and move when moving to a next tourism place after completing a tour or mission at the tourism place.

In this way, in order for a plurality of self-driving vehicles to maintain continuity and to support tourism services, the server continuously provides users with services such as movement and tourism information necessary for the users while managing the service usage history of tourism content for the users and appropriately designating the plurality of self-driving vehicles.

The service module analyzes the existing tourism usage information based on personal information of the user to recommend the tourism service to the user. This tourism service is presented in a method of accumulating data on various tourism service usage results according to age, gender, marital status, and user composition and making inferences through big data analysis.

A user satisfaction level can be determined by directly conducting a satisfaction survey, analyzing a degree of pleasure in a photo of the user in a major mission, or accumulating basic information about a satisfaction level from voices and facial expressions of people in the vehicle.

By equipping self-driving vehicles with the same specifications in the background of a unit city such as Rome or Daejeon, developing tourism resources in the city, and building a DB, it is possible to provide a futuristic city tour service that can be enjoyed comfortably regardless of a gaze of a driver or a tour guide.

### Industrial Applicability

The present invention is intended to be used in the future city tour business, which is a business group of KSEEK Co., Ltd. KSEEK Co., Ltd. has an interactive broadcasting platform that participates in quizzes and questions with a large number of people participating at the same time, and is preparing an entertainment service based on a self-driving vehicle as an expansion project in this area. The entertainment services include interactive self-driving game shows and responsive autonomous city tour services etc. The present invention introduces a plurality of transport devices such as a self-driving vehicle or a taxi to effectively connect people to consecutive points and enjoy tourism services or game services, thereby reducing road congestion, requiring fewer parking lots, and pursuing profit through the effect of raising the usage rate of the vehicle.

## Claims

1. A method of providing a continuous transport and content service to a user, the method comprising:
a step of preparing a plurality of points and content;
a step of designating a first transport device to move the user to a first point among the plurality of points;
a step of providing the content to the user boarding the first transport device;
a step of designating a second transport device to move the user to a second point that is another one of the plurality of points; and
a step of continuously providing the content to the user boarding the second transport device.

2. The method according to claim 1, wherein, even if the first transport device and the second transport device are different transport devices, the content service is continuously provided to the user through the different transport device.

3. The method according to claim 1, wherein the content is an interactive content including a user mission

4. The method according to claim 1, wherein the content includes a user mission and is a content in which the user competes with competitors while moving to various points.

5. The method according to claim 1, wherein the content includes tourism information and the plurality of points include one or more tourism points.

6. The method according to claim 1, wherein the content includes a user mission and tourism information, the plurality of points includes one or more tourism points, and the content service is a content that competes while moving.

7. The method according to claim 1, wherein the point is a point recommended to the user by analyzing at least one of user's personal information, other users' preferences, user reviews, user satisfaction, and congestion level.

8. The method according to claim 1, wherein the transport device is a self-driving device including a self-driving vehicle or a self-driving drone.

9. The method according to claim 8, wherein, even if the self-driving device for moving the user to the first point and the self-driving device for moving the user to the second point are different from each other, the content service is continuously provided to the user through each self-driving device.

10. The method according to claim 8, wherein the content is an interactive content including a user mission, and the self-driving device is a self-driving vehicle.

11. The method according to claim 8, wherein the content includes a user mission and is a content in which the user competes with competitors while moving to the plurality of points.

12. The method according to claim 8, wherein the content includes tourism information and the plurality of points include one or more tourism points.

13. The method according to claim 8, wherein the content includes a user mission and tourism information, the plurality of points includes one or more tourism points, and the content service is a content that competes while moving.

14. The method according to claim 8, wherein the point is a point recommended to the user by analyzing at least one of user's personal information, other users' preferences, user reviews, user satisfaction, and congestion level.

15. The method according to claim 8, wherein each of the self-driving devices is self-driving vehicles, and the self-driving vehicle autonomously drives to move the user, when the user boards a designated self-driving vehicle.
